# EUROPÄISCHE PATENTSCHRIFT

(11) **EP 2 483 646 B1**
(45) Veröffentlichungstag und Bekanntmachung des Hinweises auf die Patenterteilung: **10.10.2018**
(21) Anmeldenummer: 10742843.5
(22) Anmeldetag: 17.08.2010
(51) Int. Cl.: G01F 23/296, G01F 25/00

(54) **VERFAHREN ZUR BESTIMMUNG UND/ODER ÜBERWACHUNG MINDESTENS EINER PHYSIKALISCHEN PROZESSGRÖSSE**
METHOD FOR DETERMINING AND/OR MONITORING AT LEAST ONE PHYSICAL PROCESS PARAMETER
PROCÉDÉ POUR DÉTERMINER ET/OU CONTRÔLER AU MOINS UNE GRANDEUR DE PROCESSUS PHYSIQUE

(30) Priorität: 30.09.2009 DE 102009045204
(43) Veröffentlichungstag der Anmeldung: 08.08.2012
(73) Patentinhaber: Endress+Hauser SE+Co. KG, 79689 Maulburg (DE)
(72) Erfinder: URBAN, Martin, 79541 Lörrach (DE)
(74) Vertreter: Andres, Angelika Maria
(86) Internationale Anmeldenummer: PCT/EP2010/061957
(87) Internationale Veröffentlichungsnummer: WO 2011/038985

(56) Entgegenhaltungen:
- EP-A2- 1 577 667
- WO-A1-03/002952
- WO-A2-2005/001392
- DE-A1- 10 161 071
- DE-A1-102005 063 079
- US-A1- 2007 095 153

## Beschreibung

Die vorliegende Erfindung betrifft ein Verfahren zur Bestimmung und/oder Überwachung mindestens einer physikalischen Prozessgröße eines Mediums mit einer schwingfähigen Einheit, wobei eine Sende-/Empfangseinheit die schwingfähige Einheit mittels Sendesignalen zu Schwingungen anregt, wobei die Schwingungen der schwingfähigen Einheit in Form von Empfangssignalen empfangen werden, und wobei die Prozessgröße an Hand der Frequenz und/oder Amplitude des Empfangssignals und/oder der Phasenverschiebung zwischen Sende- und Empfangssignal bestimmt und/oder überwacht wird.

Die Prozessgröße ist beispielsweise der Füllstand eines Mediums in einem Behälter, die Dichte, oder die Viskosität einer Flüssigkeit. Die Vorrichtung, mit welcher die Prozessgröße bestimmt oder überwacht wird, ist ein vibronisches Messgerät, wobei die schwingfähige Einheit bevorzugt als Membran, Schwinggabel oder Einstab ausgestaltet ist.

Der Haupteinsatzbereich vibronischer Messgeräte ist die Füllstandsmessung von Flüssigkeiten in Behältern. Zur Detektion des Erreichens des vorbestimmten Füllstands wird der Effekt der Schwingungsdämpfung ausgenutzt. Das Messgerät enthält eine schwingfähige Einheit, meist in Form einer zweizinkigen Schwinggabel, welche auf einer Membran angeordnet ist, welche zu Schwingungen mit der Resonanzfrequenz angeregt wird. Bekannt sind aber auch schwingfähige Einheiten in Form eines schwingfähigen Stabes oder einer Membran ohne zusätzlich darauf angeordnete Elemente. Ein Unterschreiten eines vorbestimmten Füllstands kann dadurch erkannt werden, dass die Schwingung nicht mehr durch das Medium gedämpft wird. Umgekehrt kann das Erreichen eines vorbestimmten maximalen Füllstands dadurch erkannt werden, dass die Schwingung gedämpft wird, sobald die schwingfähige Einheit nicht mehr in Luft, sondern im Medium schwingt.

In der Regel fällt der Füllstand des Füllmediums nach einer gewissen Zeit wieder ab und die schwingfähige Einheit schwingt wieder frei. Durch die vorübergehende Bedeckung der schwingfähigen Einheit mit der Flüssigkeit können sich an der schwingfähigen Einheit Rückstände angesetzt haben. Dieser Ansatz tritt insbesondere dann auf, wenn es sich bei dem Füllmedium um eine viskose Flüssigkeit wie Senf oder Joghurt handelt. Bildet sich Ansatz an der schwingfähigen Einheit verfälscht dies die Messung, da sich die Schwingfrequenz auf Grund der mitbewegten Masse verringert. Die Prozessgröße ist dann nicht mehr zuverlässig bestimmbar, beispielsweise weil das Messgerät durch den Ansatz nicht mehr erkennt, wann die schwingfähige Einheit wieder vom Medium unbedeckt schwingt. Daher ist es wünschenswert, eine Aussage darüber treffen zu können, ob das Messgerät frei von Ansatz ist und verlässliche Messwerte liefert.

Aus dem Stand der Technik sind zur Ansatzdetektion Verfahren zur Erkennung von Änderungen in der Schwingfrequenz der schwingfähigen Einheit bekannt.

Aus der Schrift WO03/002952A1 ist ein vibronischer Sensor bekannt geworden, bei welchem die schwingfähige Einheit in vorgegebenen Zeitintervallen zu Schwingungen in zumindest einer ihrer Eigenmoden angeregt wird, und wobei anhand der detektierten Schwingungen bzw. der Änderung der detektierten Schwingungen eine sensor- und/oder prozessbedingte Störung, beispielsweise eine Ansatzbildung, erkannt wird.

Die Schrift DE 10014724A1 lehrt ein Verfahren, in welchem eine Änderung der Masse der schwingfähigen Einheit erkannt wird, indem mindestens zwei Schwingungsmoden ausgewertet werden, welche bevorzugt unterschiedlich vom Medium beeinflusst werden. Der Nachteil bei diesem Verfahren ist zum einen, dass zwei vollständig entkoppelte Schwingungsmoden existieren müssen und zum anderen, dass diese von der Elektronik verarbeitet werden müssen, was hohe Anforderungen an die Elektronik stellt.

Aus der Schrift DE 10328296 A1 ist ein Verfahren bekannt, in welchem in Abhängigkeit der Prozessbedingungen ein Grenzwert für die Schwingfrequenz festgesetzt wird, dessen Unterschreiten mit Ansatzbildung gleichzusetzen ist. Der Nachteil dieses Verfahrens ist, dass der Grenzwert für jedes Medium neu bestimmt werden muss und veränderliche Faktoren wie die Temperatur den Grenzwert beeinflussen. Des Weiteren wird der Grenzwert im Falle der Verwendung der Vorrichtung zur Detektion eines maximalen Füllstands auch durch Bedeckung der schwingfähigen Einheit mit Medium unterschritten, sodass bei gradueller Bedeckung ohne weitere Maßnahmen nicht zwischen Ansatz und Bedeckung durch Medium unterschieden werden kann.

Aus der EP1577667A2 ist es bekannt geworden, im Falle eines Oberflächenwellensensors, bei welchem eine mit einem einen Analyten enthaltenden Fluid beaufschlagte Oberfläche zu Schwingungen angeregt wird, wobei die Schwingungen in Form von Empfangssignalen empfangen werden, und wobei eine auf der Oberfläche des Analyten abgeschiedene Masse anhand der Frequenz, Amplitude und/oder Phasenverschiebung zwischen Sende- und Empfangssignal bestimmt wird. Zudem können die Dynamik des Ablagerungsprozesses beobachtet und die zeitliche Massenzunahme an der Oberfläche erkannt werden.

Die Aufgabe der Erfindung besteht darin, ein Verfahren zur Bestimmung und/oder Überwachung einer Prozessgröße mit einer schwingfähigen Einheit bereit zu stellen, welches darüber hinaus die Detektion von Ansatz an der schwingfähigen Einheit ermöglicht.

Die Aufgabe wird dadurch gelöst, dass das zeitliche Verhalten der Amplitude des Empfangssignals in Abhängigkeit einer zeitlichen Variation der Anregung der schwingfähigen Einheit untersucht und ausgewertet wird.

Unter zeitlicher Variation der Anregung ist beispielsweise eine zeitweise Unterbrechung der Anregung oder eine Änderung in der Anregungsfrequenz zu verstehen.

Das Verfahren eignet sich besonders zur Ansatzdetektion bei Füllstandsmessgeräten, welche im so genannten MAX-Betrieb, d.h. als Überlaufschutz, arbeiten. Bei dieser Anwendung schwingt die schwingfähige Einheit die meiste Zeit über in Luft, bis der vorbestimmte Füllstand vom Medium erreicht ist. In Luft erfolgt die Schwingung ungedämpft, weshalb das Abklingverhalten der schwingfähigen Einheit durch Betrachtung der abnehmenden Amplitude des Empfangssignals nach einer Anregung besonders einfach untersucht werden kann. Bei der Schwingung im Medium klingt die Schwingung auf Grund der Dämpfung erheblich schneller ab, sodass eine Untersuchung des Abklingverhaltens hier schwierig ist. Zusätzlich muss unterschieden werden, ob das schnellere Abklingen der Schwingung allein durch das Medium oder zusätzlich durch Ansatz bewirkt wird. Zur Überwindung dieses Hindernisses ist es denkbar, dass bei der Inbetriebnahme des Messgeräts oder bereits werksseitig für bestimmte Medien eine Abgleichmessung vorgenommen wird, in welcher das Abklingverhalten nach der Anregung der ansatzfreien schwingfähigen Einheit aufgenommen wird. Diese Abgleichmessung kann als Referenz für eine spätere Messung dienen, bei welcher sich eventuell Ansatz an der schwingfähigen Einheit befindet.

Erfindungsgemäße wird die schwingfähige Einheit mittels eines Frequenzsuchlaufs (Sweep) innerhalb eines vorbestimmten Frequenzbandes im Arbeitsbereich der schwingfähigen Einheit mittels Sendesignalen sukzessive mit aufeinander folgenden diskreten Erregerfrequenzen zu Schwingungen angeregt wird, wobei die schwingfähige Einheit eine Resonanzfrequenz f_{RES} aufweist, und wobei mindestens eine der Erregerfrequenzen innerhalb eines schmalen Intervalls um die Resonanzfrequenz f_{RES} liegt,
dass im Empfangssignal neben einem globalen Maximum weitere lokale Maxima vorhanden sind, welche lokalen Maxima zu Modulationen gehören, welche durch eine Überlagerung verschiedener Frequenzen zustande kommen, und welche dann auftreten,
wenn die abklingende Schwingung mit der im schmalen Intervall um die Resonanzfrequenz f_{RES} liegenden Erregerfrequenz mit Schwingungen bei im Sweep nachfolgenden Frequenzen konstruktiv überlagert werden, dass die Anzahl und/oder Höhe der lokalen Maxima detektiert wird, und dass
in Abhängigkeit der Anzahl und/oder Höhe der detektierten lokalen Maxima festgestellt wird, ob sich Ansatz an der schwingfähigen Einheit gebildet hat.

Gemäß einer vorteilhaften Ausgestaltung wird durch den Sweep eine Schwingfrequenz ermittelt, bei der eine vorgegebene Phasenverschiebung Δϕ zwischen Sendesignal und Empfangssignal vorliegt.

Ein vorteilhaftes Verfahren zur Anregung der schwingfähigen Einheit beinhaltet, dass die schwingfähige Einheit innerhalb eines so genannten Frequenzsweeps mit diskreten Anregungsfrequenzen zu Schwingungen angeregt wird. In einer Ausgestaltung wird während des Frequenzsweeps diejenige Schwingfrequenz gesucht, bei welcher eine vorgegebene Phasenverschiebung Δϕ zwischen Sendesignal und Empfangssignal auftritt. Bevorzugt beträgt die vorgegebene Phasenverschiebung Δϕ = 90°, sodass durch den Frequenzsweep die Eigenfrequenz der schwingfähigen Einheit ermittelt wird. Das Empfangssignal wird bezüglich seiner Amplitude derart ausgewertet, dass diejenige Frequenz bestimmt wird, bei welcher die vorgegebene Phasenverschiebung Δϕ vorliegt und das Empfangssignal ein globales Maximum aufzeigt, also die Amplitude maximal ist. Ein besonders vorteilhaftes Verfahren zur Auswertung der Amplitude ist in einer bislang noch nicht offengelegten Patentanmeldun 4a Anmelderin (Aktenzeichen DE 102009028022) beschrieben.

Gemäß dem dort offenbarten Verfahren wird das Empfangssignal phasenselektiv abgetastet, sodass auftretende Maxima deutlicher hervortreten und zudem der Rechenaufwand verringert wird.

In einer alternativen Ausgestaltung wird das Empfangssignal nicht in Bezug auf die Phasenverschiebung zwischen Sendesignal und Empfangssignal ausgewertet, sondern der Frequenzsweep lediglich zur Auswertung bezüglich Ansatz durchgeführt.

Im Empfangssignal eines Frequenzsweeps sind neben einem globalen Maximum weitere lokale Maxima vorhanden. Bei einem Frequenzsweep zur Ermittelung einer Frequenz, bei welcher eine vorgegebene Phasenverschiebung Δϕ zwischen Empfangssignal und Sendesignal vorliegt, tritt das globale Maximum bei der zu ermittelnden Frequenz auf. Wird der Frequenzsweep nur zur Ansatzdetektion über die auftretenden lokalen Maxima durchgeführt und das Empfangssignal entsprechend nicht bezüglich einer Phasenverschiebung verarbeitet, tritt das globale Maximum im Empfangssignal bei einer Frequenz auf, welche in einem schmalen Intervall um die Resonanzfrequenz liegt. Die lokalen Maxima gehören zu Modulationen, welche dem globalen Maximum zeitlich nachfolgen. Bei der Anregung der schwingfähigen Einheit durch den Frequenzsweep wird sie unter anderem auch mit ihrer Resonanzfrequenz f_{RES} oder einer Frequenz nahe der Resonanzfrequenz f_{RES}, welche in einem schmalen Intervall um dieselbe liegt, angeregt. Die Resonanzfrequenz f_{RES} ist von Randbedingungen wie beispielsweise dem Grad der Dämpfung, mit welcher die Schwingungen der schwingfähigen Einheit gedämpft werden, abhängig. Im Sonderfall einer ungedämpften Schwingung stimmt die Resonanzfrequenz f_{RES} mit der zu ermittelnden Erregerfrequenz überein. Durch die Anregung der schwingfähigen Einheit mit der Resonanzfrequenz f_{RES} oder einer Frequenz nahe der Resonanzfrequenz f_{RES} ist Energie in der schwingfähigen Einheit gespeichert. Dies ermöglicht das Auftreten der Modulationen, welche auf Grund der Überlagerung von der im Abklingen begriffenen Schwingung mit der Resonanzfrequenz f_{RES} oder einer Frequenz nahe der Resonanzfrequenz f_{RES} mit Schwingungen mit im Frequenzsweep zeitlich nachfolgenden Frequenzen entstehen.

Bei dämpfendem Ansatz an der schwingfähigen Einheit wird die Schwingung gedämpft, was sich in einer Abschwächung der Modulationen und somit auch der lokalen Maxima widerspiegelt. Die Anzahl und Höhe der lokalen Maxima stellt somit ein Maß für Ansatz dar, welcher sich an der schwingfähigen Einheit gebildet haben kann. Der Vorteil bei dieser Auswertemethode in Zusammenhang mit der Bestimmung der Frequenz, bei welcher eine vorgegebene Phasenverschiebung zwischen Sendesignal und Empfangssignal vorliegt ist, dass keine zusätzliche Messung zur Ansatzdetektion durchgeführt werden muss, sondern lediglich das Empfangssignal auf zusätzliche Merkmale untersucht wird. Nachfolgende Frequenzsweeps, sowie die Bestimmung der Prozessgröße können von der Ansatzdetektion unbeeinträchtigt parallel erfolgen.

Gemäß einer Weiterbildung des erfindungsgemäßen Verfahrens wird aus dem Empfangssignal ein phasenselektives Signal erzeugt und die Maxima des phasenselektiven Signals werden detektiert.

Unter einem phasenselektiven Signal ist hierbei zu verstehen, dass das Signal nur entsprechend der vorgegebenen Phasenverschiebung Δϕ ausgewählte Werte enthält.

Ist die vorgegebene Phasenverschiebung beispielsweise 90°, wird das Empfangssignal nur zu denjenigen Zeitpunkten abgetastet, zu welchen ein zum Sendesignal um 90° verschobenes Signal Extrema und/oder Nulldurchgänge aufzeigt. Diese Abtastpunkte werden geeignet verrechnet und bilden das phasenselektive Signal. Weist das Empfangssignal besagte 90° Phasenverschiebung auf, werden mit dieser Methode dessen Extrema und Nulldurchgänge detektiert und geeignet ausgewertet. Weicht die Phasenverschiebung des Empfangssignals von der vorgegebenen ab, werden Punkte des Empfangssignals detektiert, welche nicht mit den Extrema oder Nulldurchgängen übereinstimmen.

Die erwähnten Modulationen treten auch in dem phasenselektiven Signal auf.

Bei einer weiteren Weiterbildung der Erfindung wird das Empfangssignal bezüglich der Abklingkonstanten der sich durch die Art der Anregung ergebenden Exponentialfunktion ausgewertet und in Abhängigkeit der Änderung der Abklingkonstanten über einen definierten Zeitraum festgestellt, ob sich Ansatz an der schwingfähigen Einheit gebildet hat. Trotz der auftretenden Modulationen ist der exponentielle Abfall der Amplitude des Empfangssignals in Form der Einhüllenden zu erkennen. Beispielsweise durch einen Fit kann die dem Abklingverhalten entsprechende Exponentialfunktion gefunden und die Abklingkonstante bestimmt werden.

Eine Weiterbildung des erfindungsgemäßen Verfahrens sieht vor, dass eine Schwelle U_{Grenz} des Empfangssignals oder des phasenselektiven Signals festgesetzt wird, welche von einem globalen Maximum zu einem Zeitpunkt t₁ überschritten und zu einem späteren Zeitpunkt t₂ wieder unterschritten wird, wobei das globale Maximum bei einer Frequenz auftritt, welche innerhalb des schmalen Intervalls um die Resonanzfrequenz f_{RES} liegt, und/oder bei welcher die vorgegebene Phasenverschiebung Δϕ vorliegt, und wobei der Zeitpunkt t₂ des Unterschreitens der Schwelle U_{Grenz} das Ende des globalen Maximums festsetzt.

Die Schwelle U_{Grenz} ist so zu wählen, das Grundrauschen unterhalb derselben liegt und das Überschreiten der Schwelle U_{Grenz} somit eindeutig mit dem Auftreten eines Maximums verbunden werden kann.

Gemäß einer Weiterbildung des erfindungsgemäßen Verfahrens wird vorgeschlagen, dass die Anzahl der im Empfangssignal oder im phasenselektiven Signal auftretenden lokalen Maxima bestimmt wird, wobei ein lokales Maximum dadurch definiert ist, dass die Schwelle U_{Grenz} zu einem hinter dem Zeitpunkt t₂, welcher das Ende des globalen Maximums bestimmt, liegenden Zeitpunkt t₃ überschritten und zu einem späteren Zeitpunkt t₄ unterschritten wird, dass eine Mindestanzahl an lokalen Maxima festgesetzt wird, welche vorhanden sein muss, wenn die schwingfähige Einheit keinen Ansatz aufweist und dass durch Vergleich der auftretenden Anzahl an lokalen Maxima mit der Mindestanzahl bestimmt wird, ob sich an der schwingfähigen Einheit Ansatz gebildet hat. Beispielsweise kann eine Referenzmessung der ungedämpften schwingfähigen Einheit bei der Inbetriebnahme des Messgeräts durchgeführt werden, bei welcher die auftretende Anzahl an lokalen Maxima bestimmt wird. Nimmt diese Anzahl während des Messbetriebs ab oder verschwinden die lokalen Maxima gar vollständig, kann auf Ansatzbildung geschlossen werden.

Eine Weiterbildung der erfindungsgemäßen Lösung besteht darin, dass die Varianz der Spannungswerte des Empfangssignals oder des phasenselektiven Signals, welche hinter dem Zeitpunkt t₂ liegen, der das Ende des globalen Maximums bestimmt, ermittelt wird, dass ein Schwellenwert für die Varianz festgelegt wird, welcher mindestens erreicht wird, wenn die schwingfähige Einheit frei von Ansatz ist und dass durch Vergleich des für die Varianz bestimmten Werts mit dem Schwellenwert bestimmt wird, ob sich an der schwingfähigen Einheit Ansatz gebildet hat. Die Varianz ist umso höher, je höher die lokalen Maxima sind. Eine geringe Varianz ist daher mit wenig ausgeprägten Maxima verbunden, was wiederum die Folge von Ansatzbildung ist.

Eine weitere Weiterbildung der Erfindung ist darin zu sehen, dass die schwingfähige Einheit eine Resonanzfrequenz f_{RES} aufweist, dass die Anregung der schwingfähigen Einheit mit einer in einem schmalen Intervall um die Resonanzfrequenz f_{RES} liegenden Frequenz oder mit einer Frequenz, bei welcher zwischen Sendesignal und Empfangssignal eine vorgegebene Phasenverschiebung Δϕ besteht, geschieht, dass die Anregung für kurze Zeit unterbrochen wird, dass das Empfangssignal bezüglich der Abklingkonstanten der sich durch die Unterbrechung der Anregung ergebenden Exponentialfunktion ausgewertet wird, und dass in Abhängigkeit der Abklingkonstanten festgestellt wird, ob sich Ansatz an der schwingfähigen Einheit gebildet hat.

Die Anregung der schwingfähigen Einheit erfolgt in dieser Ausgestaltung entweder mit der Resonanzfrequenz bzw. einer Frequenz, welche der Resonanzfrequenz nahe kommt, oder mit der Frequenz, bei welcher eine vorgegebene Phasenverschiebung Δϕ zwischen Sendesignal und Empfangssignal vorliegt. Beispielsweise stellt sich diese Frequenz automatisch durch die Vorgabe der Phasenverschiebung Δϕ über einen Schwingkreis ein. Die Resonanzfrequenz wird beispielsweise durch Aufnahme des Empfangssignals und Bestimmung der maximalen Amplitude bestimmt.

Um das Abklingverhalten der schwingfähigen Einheit über das Empfangssignal untersuchen zu können, muss die Anregung kurz unterbrochen werden. Kurz bedeutet in diesem Fall nur so lange, bis das Empfangssignal einen deutlichen Abfall zeigt, beispielsweise auf 10% des Maximalwertes, sodass die Abklingkonstante eindeutig bestimmbar ist. Dann kann die Anregung fortgesetzt werden. Die Intervalle, in denen die Anregung unterbrochen und die Abklingkonstante bestimmt wird, sind hierbei vorzugsweise an den Prozess anzupassen.

Gemäß einer vorteilhaften Ausgestaltung der Erfindung beträgt die vorgegebene Phasenverschiebung 90°. Wird die schwingfähige Einheit derart angeregt, dass die Phasenverschiebung 90° beträgt, schwingt sie mit der Eigenfrequenz. Bei der Schwingung in Luft ist die Eigenfrequenz gleich der Resonanzfrequenz und somit auf diese Weise die Anregung mit der Resonanzfrequenz möglich.

Bei einer Weiterbildung des erfindungsgemäßen Verfahrens wird falls sich Ansatz gebildet hat, eine Fehlermeldung erzeugt und ausgegeben und/oder angezeigt. Insbesondere wird die Fehlermeldung über ein Bussystem an eine Leitwarte übertragen. Alternativ oder zusätzlich kann die Fehlermeldung auf verschiedenartige Weise angezeigt werden, z.B. über eine Leuchtdiode, einen Signalton, oder auf einem Display.

Eine vorteilhafte Ausgestaltung des erfindungsgemäßen Verfahrens beinhaltet, dass bei der Auswertung der Modulationen mehrere Grenzwerte für die Anzahl an lokalen Maxima oder die Varianz vorgegeben werden, dass durch Vergleich mit der ermittelten Anzahl an auftretenden lokalen Maxima oder mit der ermittelten Varianz bestimmt wird, wie stark die schwingfähige Einheit von Ansatz betroffen ist und dass eine entsprechende Fehlermeldung erzeugt und ausgegeben und/oder angezeigt wird. Durch den Vergleich mit mehreren Grenzwerten findet sozusagen eine Abstufung in Ansatzgrade statt. Ist der Ansatzgrad gering, besteht keine unmittelbare Gefahr, dass die Prozessgröße fehlerhaft bestimmt wird und eine Warnmeldung in Form eines Hinweises auf beginnende Ansatzbildung genügt. Ist der Ansatzgrad hingegen hoch, kann eine dringende Warnmeldung ausgegeben werden, welche den baldigen Austausch bzw. die baldige Säuberung des Messgeräts fordert. Die verschiedenen Warnmeldungen können beispielsweise auf einem Display erscheinen.

In einer Ausgestaltung des erfindungsgemäßen Verfahrens wird das zeitliche Verhalten der Amplitude des Empfangssignals oder des phasenselektiven Signals bei der Schwingung der schwingfähigen Einheit in Luft ausgewertet. Bei der Schwingung in Luft erfährt die schwingfähige Einheit nahezu keine Dämpfung, sodass dämpfender Ansatz gut detektierbar ist.

Eine weitere Ausgestaltung beinhaltet, dass das zeitliche Verhalten der Amplitude des Empfangssignals oder des phasenselektiven Signals bei der Schwingung der schwingfähigen Einheit im Medium ausgewertet wird und dass hierzu eine Abgleichsmessung im Medium erfolgt, in welcher das Verhalten ohne Ansatz an der schwingfähigen Einheit bestimmt wird.

Die Auswertung bei der Schwingung im Medium wird dadurch erschwert, dass das Medium selbst dämpfend ist. Um das Abklingverhalten in Bezug auf Ansatzbildung untersuchen zu können ist daher beispielsweise eine Referenzmessung bei der Inbetriebnahme des Messgerätes denkbar, welche den Einfluss des dämpfenden Mediums auf die Schwingung bestimmt. Ansatzbildung kann dann aus zu stärkerer Dämpfung hingehenden Abweichungen in diesem Verhalten ermittelt werden.

In einer Weiterbildung der erfindungsgemäßen Lösung handelt es sich bei der schwingfähigen Einheit um eine Membran, um eine Membran mit einer Schwinggabel oder um einen Schwingstab. Bei der Vorrichtung, bei welcher das erfindungsgemäße Verfahren zum Einsatz kommt, handelt es sich um ein vibronisches Messgerät, mit welchem beispielsweise der Füllstand, die Dichte, oder die Viskosität einer Flüssigkeit bestimmt wird. Vibronische Füllstandsmessgeräte für Flüssigkeiten mit Schwinggabeln werden von der Anmelderin unter dem Namen "Liquiphant" angeboten und vertrieben.

Die Erfindung wird anhand der nachfolgenden Figuren näher erläutert.
- Fig. 1: zeigt das Empfangssignal mit Modulationen bei Anregung mit einem Sweep;
- Fig. 2: zeigt das phasengewichtete und tiefpassgefilterte Empfangssignal bei verschiedenen Ansatzmengen.

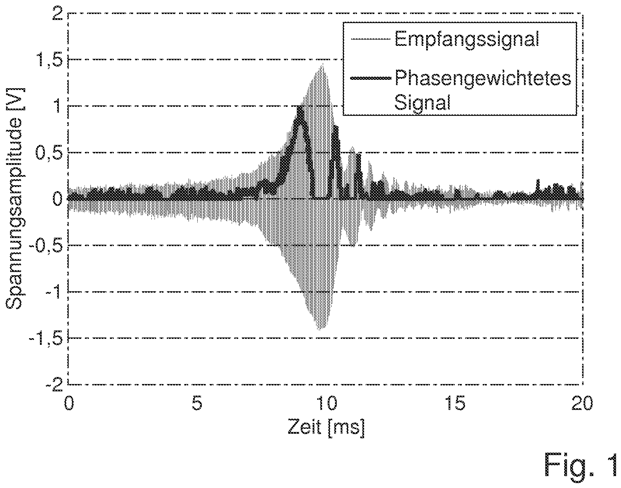

In Fig. 1 ist das mit einem Membranschwinger aufgenommene Empfangssignal bei Anregung der Membran mit einem Frequenzsweep dargestellt. Zusätzlich ist ein phasenselektives Signal dargestellt. Dieses erhält man, wenn das Empfangssignal zur Ermittlung einer Schwingfrequenz, bei der eine vorgegebene Phasenverschiebung zwischen Sendesignal und Empfangssignal vorliegt, nur zu bestimmten Zeitpunkten abgetastet wird, wobei die bestimmten Zeitpunkte so gewählt sind, dass wenn die vorgegebene Phasenverschiebung Δϕ zwischen Sendesignal und Empfangssignal vorliegt, die Extrema und/oder Nulldurchgänge im Empfangssignal detektiert und geeignet ausgewertet werden. Wie zu erkennen ist, treten sowohl im unveränderten Empfangssignal als auch im phasenselektiven Signal Modulationen auf. Das Vorhandensein in beiden Signalen bedeutet, dass auch während der Modulationen die vorgegebene Phasenverschiebung Δϕ auftritt.

Die Modulationen kommen durch die Überlagerung verschiedener Frequenzen zu Stande. Eine Überlagerung der Frequenzen ist trotz der diskreten Anregung möglich, da die Schwingungen nicht sofort nach der Anregung enden, sondern exponentiell abfallen, sodass für eine bestimmte Zeit Schwingungsenergie gespeichert ist. In Abhängigkeit der vorliegenden Phasenverschiebung verstärken sich die Schwingungen oder schwächen sich ab. Maxima im phasenselektiven Signal bzw. im Empfangssignal treten dann auf, wenn sich die abklingende Schwingung und die neu angeregten Schwingung geeignet überlagern. Somit wird die vorgegebene Phasenverschiebung Δϕ nicht nur für die zu ermittelnde Frequenz erfüllt, bei welcher das globale Maximum auftritt, sondern auch bei nachfolgenden Frequenzen. Die Amplitude ist während der Modulationen allerdings geringer, sodass die vom Frequenzsweep zu bestimmende Frequenz eindeutig festgelegt ist. Der exponentielle Abfall der resonanten Schwingung ist in Form der Einhüllenden des Empfangssignals deutlich erkennbar.

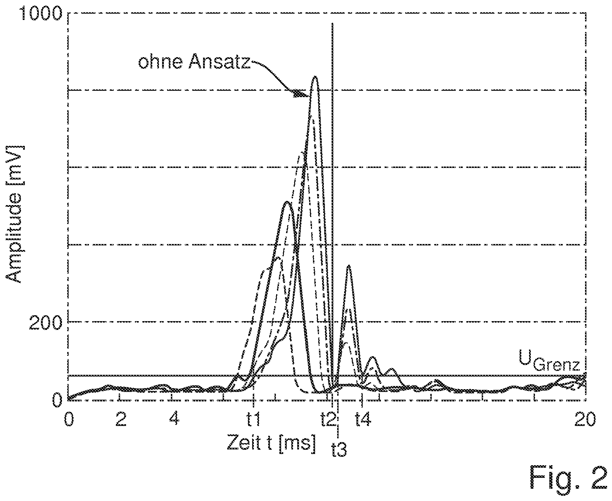

Fig. 2 illustriert den Effekt von Ansatz auf das phasenselektive Empfangssignal bei einem Frequenzsweep, mittels welchem die Frequenz ermittelt wird, bei welcher eine vorgegebene Phasenverschiebung Δϕ zwischen Sendesignal und Empfangssignal vorliegt. Abgebildet sind die mit einem Membranschwinger ohne Ansatz und mit vier verschiedenen Ansatzmengen über einen Zeitraum von 20 ms aufgenommenen phasenselektiven Empfangssignale nach einer Tiefpassfilterung. Je größer die Masse des Ansatzes ist, desto niedriger ist die Amplitude des phasenselektiven Empfangssignals. Die abgebildeten Kurven wurden mit Ansatzmengen von 100, 200, 300 und 400 mg aufgenommen, was etwa 1-4% der Membranmasse entspricht. Das globale Maximum wird abgeschwächt, ist in allen Fällen aber deutlich zu erkennen. Die lokalen Maxima hingegen werden aufgrund des schnellen Abklingens der Schwingung bereits an ihrer Entstehung gehindert, sodass ihre Anzahl abnimmt und für größere Ansatzmengen keine lokalen Maxima mehr auftreten.

Zur Ansatzdetektion über die Auswertung von Modulationen in der Amplitude des Empfangssignals, welche bei einem Frequenzsweep dem globalen Maximum bei der vom Frequenzsweep zu
ermittelnden Erregerfrequenz zeitlich nachfolgen. Bevorzugt erfolgt die Auswertung gemäß dem in der bisher noch nicht offengelegten Patentanmeldung (Aktenzeichen DE 10 2009 028022) beschriebenen Verfahren, mittels welchem die Modulationen besser vom Rauschen getrennt werden können. Das globale Maximum ist bevorzugt durch zeitweiliges Überschreiten einer vorbestimmten Schwelle U_{Grenz} bestimmt, wobei der Anfang des globalen Maximums durch den Zeitpunkt t₁ festgesetzt ist, zu welchem die Schwelle U_{Grenz} zum ersten Mal überschritten wird, und das Ende des globalen Maximums durch den Zeitpunkt t₂ festgelegt ist, zu welchem die Schwelle U_{Grenz} zum zweiten Mal gekreuzt wird, allerdings in gegensätzlicher Richtung. Entsprechend ist das erste lokale Maximum durch die Zeitpunkte t₃ und t₄ definiert, zu welchen die Schwelle U_{Grenz} das dritte und vierte Mal gekreuzt wird, usw.

Die Schwelle U_{Grenz} wird hierbei derart festgesetzt, dass sie immer oberhalb des Grundrauschens des Empfangssignals liegt.

Die in Fig. 2 markierten Zeitpunkte beziehen sich auf die Kurve, welche ohne Ansatz an der schwingfähigen Einheit aufgenommen wurde.

Zur Auswertung der Modulationen bieten sich insbesondere zwei Methoden an.

Bei der ersten Methode wird die Anzahl der auftretenden lokalen Maxima bestimmt und mit der Anzahl verglichen, welche für ein Empfangssignal einer garantiert ansatzfreien schwingfähigen Einheit bestimmt wurde. Bevorzugt erfolgt diese Referenzmessung bei der Inbetriebnahme des Messgerätes oder bereits bei der Fertigung. Bei einem Messgerät, welches zur Überwachung eines maximalen Füllstandes eingesetzt wird, ist eine fertigungsseitige Referenzmessung besonders geeignet, da die Referenzmessung in Luft erfolgen und daher unabhängig vom Füllmedium durchgeführt werden kann. Alternativ kann an Stelle der genauen Anzahl an lokalen Maxima bestimmt werden, ob lokale Maxima vorliegen oder nicht. Liegen keine vor, hat sich mit großer Wahrscheinlichkeit eine gefährliche Ansatzmenge gebildet und ein Alarmsignal wird ausgegeben oder eine Warnung an eine Leitwarte übertragen.

Bei einer alternativen Auswertemethode der Modulationen wird die Varianz der Messwerte nach dem Auftreten des globalen Maximums, also für alle nach der Zeit t₂ aufgenommenen Messwerte, bestimmt. Die Varianz gibt die Abweichung eines Messwerts vom Mittelwert an. Je geringer die Varianz ist, desto glatter ist die Kurve und desto weniger Maxima und Minima treten auf. Eine geringe Varianz ist daher mit einem Verschwinden der Modulationen und somit mit Ansatzbildung verbunden.

### Bezugszeichenliste

- t₁: Zeitpunkt, zu welchem das globale Maximum beginnt
- t₂: Zeitpunkt, zu welchem das globale Maximum endet
- t₃: Zeitpunkt, zu welchem das erste lokale Maximum beginnt,
- t₄: Zeitpunkt, zu welchem das erste lokale Maximum endet.
- U_{Grenz}: Spannungswert, welcher vom Empfangssignal übertreten werden muss, damit ein Maximum als solches erkannt wird

## Patentansprüche

1. Verfahren zur Bestimmung oder Überwachung mindestens einer physikalischen Prozessgröße eines Mediums mit einer schwingfähigen Einheit,
wobei eine Sende-/Empfangseinheit die schwingfähige Einheit mittels Sendesignalen zu Schwingungen anregt, die gedämpft werden, sobald die schwingfähige Einheit im Medium schwingt,
wobei die Schwingungen der schwingfähigen Einheit in Form von Empfangssignalen empfangen werden,
und wobei die Prozessgröße anhand der Frequenz oder Amplitude des Empfangssignals oder der Phasenverschiebung zwischen Sende- und Empfangssignal bestimmt oder überwacht wird,
wobei das zeitliche Verhalten der Amplitude des Empfangssignals in Abhängigkeit einer zeitlichen Variation der Anregung der schwingfähigen Einheit untersucht und ausgewertet wird
**dadurch gekennzeichnet,**
**dass** die schwingfähige Einheit mittels eines Frequenzsuchlaufs (Sweep) innerhalb eines vorbestimmten Frequenzbandes im Arbeitsbereich der schwingfähigen Einheit mittels Sendesignalen sukzessive mit aufeinander folgenden diskreten Erregerfrequenzen zu Schwingungen angeregt wird, wobei die schwingfähige Einheit eine Resonanzfrequenz (f_{RES}) aufweist, und wobei mindestens eine der Erregerfrequenzen innerhalb eines schmalen Intervalls um die Resonanzfrequenz (f_{RES}) liegt,
**dass** im Empfangssignal neben einem globalen Maximum weitere lokale Maxima vorhanden sind, welche lokalen Maxima zu Modulationen gehören, welche durch eine Überlagerung verschiedener Frequenzen zustande kommen, und welche dann auftreten,
wenn die abklingende Schwingung mit der im schmalen Intervall um die Resonanzfrequenz (f_{RES}) liegenden Erregerfrequenz mit Schwingungen bei im Sweep nachfolgenden Frequenzen konstruktiv überlagert werden, dass die Anzahl und/oder Höhe der lokalen Maxima detektiert wird, und dass
in Abhängigkeit der Anzahl und/oder Höhe der detektierten lokalen Maxima festgestellt wird, ob sich Ansatz an der schwingfähigen Einheit gebildet hat.

2. Verfahren nach Anspruch 1,
**dadurch gekennzeichnet,**
**dass** durch den Sweep eine Schwingfrequenz ermittelt wird, bei der eine vorgegebene Phasenverschiebung (Δϕ) zwischen Sendesignal und Empfangssignal vorliegt.

3. Verfahren nach Anspruch 2,
**dadurch gekennzeichnet,**
**dass** aus dem Empfangssignal ein phasenselektives Signal erzeugt wird und die Maxima des phasenselektiven Signals detektiert werden.

4. Verfahren nach Anspruch 1 oder 3,
**dadurch gekennzeichnet,**
**dass** das Empfangssignal bezüglich der Abklingkonstanten der sich durch die Art der Anregung ergebenden Exponentialfunktion ausgewertet wird, und dass in Abhängigkeit der Änderung der Abklingkonstanten über einen definierten Zeitraum festgestellt wird, ob sich Ansatz an der schwingfähigen Einheit gebildet hat.

5. Verfahren nach mindestens einem der Ansprüche 1-4,
**dadurch gekennzeichnet,**
**dass** eine Schwelle (U_{Grenz}) des Empfangssignals oder des phasenselektiven Signals festgesetzt wird, welche von einem globalen Maximum zu einem Zeitpunkt (t₁) überschritten und zu einem späteren Zeitpunkt (t₂) wieder unterschritten wird, wobei das globale Maximum bei einer Frequenz auftritt, welche innerhalb des schmalen Intervalls um die Resonanzfrequenz (f_{RES}) liegt, und/oder bei welcher die vorgegebene Phasenverschiebung (Δϕ) vorliegt, und wobei der Zeitpunkt (t₂) des Unterschreitens der Schwelle (U_{Grenz}) das Ende des globalen Maximums festsetzt.

6. Verfahren nach Anspruch 5,
**dadurch gekennzeichnet,**
**dass** die Anzahl der im Empfangssignal oder im phasenselektiven Signal auftretenden lokalen Maxima bestimmt wird, wobei ein lokales Maximum dadurch definiert ist, dass die Schwelle (U_{Grenz}) zu einem hinter dem Zeitpunkt (t₂), welcher das Ende des globalen Maximums bestimmt, liegenden Zeitpunkt (t₃) überschritten und zu einem späteren Zeitpunkt (t₄) unterschritten wird, dass eine Mindestanzahl an lokalen Maxima festgesetzt wird, welche vorhanden sein muss, wenn die schwingfähige Einheit keinen Ansatz aufweist und dass durch Vergleich der auftretenden Anzahl an lokalen Maxima mit der Mindestanzahl bestimmt wird, ob sich an der schwingfähigen Einheit Ansatz gebildet hat.

7. Verfahren nach Anspruch 5 oder 6,
**dadurch gekennzeichnet,**
**dass** die Varianz der Spannungswerte des Empfangssignals oder des phasenselektiven Signals, welche hinter dem Zeitpunkt t₂ liegen, welcher das Ende des globalen Maximums bestimmt, ermittelt wird, dass ein Schwellenwert für die Varianz festgelegt wird, welcher mindestens erreicht wird, wenn die schwingfähige Einheit frei von Ansatz ist und dass durch Vergleich des für die Varianz bestimmten Werts mit dem Schwellenwert bestimmt wird, ob sich an der schwingfähigen Einheit Ansatz gebildet hat.

8. Verfahren nach mindestens einem der Ansprüche 2-7,
**dadurch gekennzeichnet,**
**dass** die vorgegebene Phasenverschiebung 90° beträgt.

9. Verfahren nach mindestens einem der vorangehenden Ansprüche,
**dadurch gekennzeichnet,**
**dass** falls sich Ansatz gebildet hat, eine Fehlermeldung erzeugt und ausgegeben und/oder angezeigt wird.

10. Verfahren nach mindestens einem der Ansprüche 1-7,
**dadurch gekennzeichnet,**
**dass** mehrere Grenzwerte für die Anzahl an lokalen Maxima oder die Varianz vorgegeben werden, dass durch Vergleich mit der ermittelten Anzahl an auftretenden lokalen Maxima oder mit der ermittelten Varianz bestimmt wird, wie stark die schwingfähige Einheit von Ansatz betroffen ist und dass eine entsprechende Fehlermeldung erzeugt und ausgegeben und/oder angezeigt wird.

11. Verfahren nach mindestens einem der vorangehenden Ansprüche,
**dadurch gekennzeichnet,**
**dass** das zeitliche Verhalten der Amplitude des Empfangssignals oder des phasenselektiven Signals bei der Schwingung der schwingfähigen Einheit in Luft ausgewertet wird.

12. Verfahren nach mindestens einem der vorangehenden Ansprüche,
**dadurch gekennzeichnet,**
**dass** das zeitliche Verhalten der Amplitude des Empfangssignals oder des phasenselektiven Signals bei der Schwingung der schwingfähigen Einheit im Medium ausgewertet wird und dass hierzu eine Abgleichsmessung im Medium erfolgt, in welcher das Verhalten ohne Ansatz an der schwingfähigen Einheit bestimmt wird.

13. Verfahren nach mindestens einem der vorangehenden Ansprüche,
**dadurch gekennzeichnet,**
**dass** es sich bei der schwingfähigen Einheit um eine Membran, um eine Membran mit einer Schwinggabel oder um einen Schwingstab handelt.

## Claims

1. Procedure for determining or monitoring at least one physical process variable of a medium with a unit capable of vibration,
wherein a transmission/reception unit causes the unit capable of vibration to vibrate using transmission signals which are attenuated as soon as the unit capable of vibration vibrates in the medium,
wherein the vibrations of the unit capable of vibration are received in the form of reception signals,
and wherein the process variable is determined or monitored on the basis of the frequency or the amplitude of the reception signal or the phase shift between the transmission signal and the reception signal,
wherein the behavior over time of the amplitude of the reception signal is examined and evaluated depending on a variation over time in the excitation of the unit capable of vibration,
**characterized in that**
by means of a frequency sweep within a predefined frequency range in the operating range of the unit capable of vibration the unit capable of vibration is gradually excited to vibrate by means of transmission signals with consecutive discrete excitation frequencies,
wherein the unit capable of vibration has a resonance frequency (f_{RES}), and
wherein at least one of the excitation frequencies is located in a narrow interval around the resonance frequency (f_{RES}),
**in that**, in addition to a global maximum value, the reception signal has additional local maximum values, said local maximum values belonging to modulations which originate from the superimposition of various frequencies and which occur when the decaying vibration at the excitation frequency located in the narrow interval around the resonance frequency (f_{RES}) is superimposed in a constructive manner with vibrations at consecutive frequencies in the sweep, **in that** the number and/or level of the local maximum values is detected and **in that** the number and/or level of the detected local maximum values is used to determine whether deposit buildup has formed on the unit capable of vibration.

2. Procedure as claimed in Claim 1,
**characterized in that**
a vibration frequency at which a predefined phase shift (Δϕ) is present between the transmission signal and the reception signal is determined by the sweep.

3. Procedure as claimed in Claim 2,
**characterized in that**
a phase-selective signal is generated from the reception signal and the maximum values of the phase-selective signal are detected.

4. Procedure as claimed in Claim 1 or 3,
**characterized in that**
the reception signal is evaluated in relation to the decay constants of the exponential function resulting from the type of excitation, and **in that** the change in the decay constants over a defined period of time is used to determine whether deposit buildup has formed on the unit capable of vibration.

5. Procedure as claimed in at least one of the Claims 1 to 4,
**characterized in that**
a threshold (U_{Grenz}) of the reception signal or of the phase-selective signal is determined which is exceeded by a global maximum at a time (t₁) and is undershot again at a later point in time (t₂), wherein the global maximum occurs at a frequency which is located within the narrow interval around the resonance frequency (f_{RES}), and/or at which the predefined phase shift (Δϕ) is present, and wherein the point in time (t₂) at which the threshold (U_{Grenz}) is undershot defines the end of the global maximum.

6. Procedure as claimed in Claim 5,
**characterized in that**
the number of the local maximum values occurring in the reception signal or in the phase-selective signal is determined, wherein a local maximum is defined by the fact that the threshold (U_{Grenz}) is exceeded at a time (t₃) after the time (t₂) which specifies the end of the global maximum and is undershot at a later point in time (t₄), **in that** a minimum number of local maximum values is specified that must be present if the unit capable of vibration does not have any buildup and **in that** the number of local maximum values that occur is compared with the minimum number to determine whether deposit buildup has formed on the unit capable of vibration.

7. Procedure as claimed in Claim 5 or 6,
**characterized in that**
the variance of the voltage values of the reception signal or the phase-selective signal that are located after the time t₂, which specifies the end of the global maximum, is determined, **in that** a threshold value is determined for the variance which must at least be reached if the unit capable of vibration is free from deposit buildup and **in that** the value determined for the variance is compared with the threshold value to determine whether deposit buildup has formed on the unit capable of vibration.

8. Procedure as claimed in at least one of the Claims 2 to 7,
**characterized in that**
the predefined phase shift is 90°.

9. Procedure as claimed in at least one of the previous claims,
**characterized in that**
an error message is generated and output and/or displayed if deposit buildup has formed.

10. Procedure as claimed in at least one of the Claims 1 to 7,
**characterized in that**
several limit values are predefined for the number of local maximum values or the variance, **in that** by running a comparison with the determined number of local maximum values that occur or with the determined variance it is possible to determine how much the unit capable of vibration is affected by deposit buildup, and **in that** a corresponding error message is generated and output and/or displayed.

11. Procedure as claimed in at least one of the previous claims,
**characterized in that**
an evaluation is performed on the behavior over time of the amplitude of the reception signal or of the phase-selective signal when the unit capable of vibration is vibrating in air.

12. Procedure as claimed in at least one of the previous claims,
**characterized in that**
an evaluation is performed on the behavior over time of the amplitude of the reception signal or of the phase-selective signal when the unit capable of vibration is vibrating in the medium, and **in that**, for this purpose, a comparison measurement is performed in the medium whereby the behavior is determined when there is no deposit buildup on the unit capable of vibration.

13. Procedure as claimed in at least one of the previous claims,
**characterized in that**
the unit capable of vibration is a membrane, a membrane with a tuning fork or a vibrating rod.

## Revendications

1. Procédé destiné à la détermination ou la surveillance d'au moins une grandeur process physique d'un produit avec une unité apte à vibrer,
pour lequel une unité d'émission / de réception excite au moyen de signaux d'émission l'unité apte à vibrer en vibrations, lesquelles sont amorties sitôt que l'unité apte à vibrer vibre dans le produit,
pour lequel les vibrations de l'unité apte à vibrer sont reçues sous la forme de signaux de réception,
et pour lequel la grandeur process est déterminée ou surveillée au moyen de la fréquence ou de l'amplitude du signal de réception ou du déphasage entre le signal d'émission et de réception,
pour lequel le comportement temporel de l'amplitude du signal de réception est analysé et exploité en fonction d'une variation dans le temps de l'excitation de l'unité apte à vibrer,
**caractérisé**
**en ce que** l'unité apte à vibrer est excitée en vibrations avec un balayage de fréquence au sein d'une bande de fréquence prédéfinie dans la zone de travail de l'unité apte à vibrer au moyen de signaux d'émission, successivement avec des fréquences d'excitation discrètes consécutives,
pour lequel l'unité apte à vibrer présente une fréquence de résonance (f_{RES}), et pour lequel au moins l'une des fréquences d'excitation est située à l'intérieur d'un intervalle étroit autour de la fréquence de résonance (f_{RES}),
**en ce que** dans le signal de réception, outre un maximum global, d'autres maximum locaux sont présents, lesquels maximum locaux correspondent à des modulations qui proviennent d'un chevauchement de différentes fréquences, et qui apparaissent lorsque la vibration évanescente à la fréquence d'excitation située dans l'intervalle étroit autour de la fréquence de résonance (f_{RES}) est superposée de façon constructive avec des vibrations à des fréquences consécutives dans le balayage, en ce que le nombre et la hauteur des maximum locaux sont détectés, et en ce qu'on détermine, en fonction du nombre et/ou de la hauteur des maximum locaux détectés, si un dépôt s'est formé sur l'unité apte à vibrer.

2. Procédé selon la revendication 1,
**caractérisé**
**en ce qu'**une fréquence de vibration est déterminée par le balayage, fréquence à laquelle un déphasage (Δϕ) prédéfini est présent entre le signal d'émission et le signal de réception.

3. Procédé selon la revendication 2,
**caractérisé**
**en ce qu'** à partir du signal de réception, un signal à sélection de phase est généré et les maximum du signal à sélection de phase sont détectés.

4. Procédé selon la revendication 1 ou 3,
**caractérisé**
**en ce que** le signal de réception est exploité par rapport aux constantes d'évanouissement de la fonction exponentielle résultant de la nature de l'excitation, et en ce qu'en fonction de la modification des constantes d'évanouissement, on détermine sur une période de temps définie si un dépôt s'est formé sur l'unité apte à vibrer.

5. Procédé selon au moins l'une des revendications 1 à 4,
**caractérisé**
**en ce qu'**est défini un seuil (U_{Grenz}) du signal de réception ou du signal à sélection de phase, lequel seuil est dépassé par le haut par un maximum global en un instant (t₁) et est de nouveau dépassé par le bas à un instant (t₂) postérieur, le maximum global apparaissant à une fréquence qui se situe dans l'intervalle étroit autour de la fréquence de résonance (f_{RES}), et/ou à laquelle le déphasage (Δϕ) prédéfini est présent, et l'instant (t₂) du dépassement par le bas du seuil (U_{Grenz}) définissant la fin du maximum global.

6. Procédé selon la revendication 5,
**caractérisé**
**en ce qu'**est déterminé le nombre de maximum locaux apparaissant dans le signal de réception ou dans le signal à sélection de phase, un maximum local étant défini par le fait que le seuil (U_{Grenz}) est dépassé par le haut à un instant (t₃) et est dépassé par le bas à un instant (t₄) postérieur, situés après l'instant (t₂), lequel détermine la fin du maximum global,
**en ce qu'**est défini un nombre minimum de maximum locaux, qui doit être présent lorsque l'unité apte à vibrer ne présente pas de dépôt et en ce qu'en comparant le nombre apparaissant de maximum de locaux avec le nombre minimum, on détermine si un dépôt s'est formé sur l'unité apte à vibrer.

7. Procédé selon la revendication 5 ou 6,
**caractérisé**
**en ce qu'**est déterminée la variance des valeurs de tension du signal de réception ou du signal à sélection de phase, qui se situent après l'instant t₂, lequel détermine la fin du maximum global, en ce qu'est défini une valeur seuil pour la variance, laquelle est atteinte au moins lorsque l'unité apte à vibrer est exempte de dépôt et en ce que, par comparaison de la valeur déterminée pour la variance avec la valeur seuil, on détermine si un dépôt s'est formé sur l'unité apte à vibrer.

8. Procédé selon au moins l'une des revendications 2 à 7,
**caractérisé**
**en ce que** le déphasage prédéfini est de 90°.

9. Procédé selon au moins l'une des revendications précédentes,
**caractérisé**
**en ce qu'**au cas où un dépôt s'est formé, un message d'erreur est généré et délivré et/ou affiché.

10. Procédé selon au moins l'une des revendications 1 à 7,
**caractérisé**
**en ce que** plusieurs valeurs seuil sont prédéfinies pour le nombre de maximum locaux ou pour la variance, en ce que, par comparaison avec le nombre déterminé de maximum locaux apparaissant ou avec la variance déterminée, on détermine l'importance du dépôt sur l'unité apte à vibrer, et en ce qu'un message d'erreur correspondant est généré et délivré et/ou affiché.

11. Procédé selon au moins l'une des revendications précédentes,
**caractérisé**
**en ce qu'**est exploité le comportement temporel de l'amplitude du signal de réception ou du signal à sélection de phase lors de la vibration de l'unité apte à vibrer.

12. Procédé selon au moins l'une des revendications précédentes,
**caractérisé**
**en ce qu'**est exploité le comportement temporel de l'amplitude du signal de réception ou du signal à sélection de phase lors de la vibration de l'unité apte à vibrer dans le produit, et en ce qu'il s'ensuit une mesure de comparaison, avec laquelle le comportement en l'absence de dépôt sur l'unité apte à vibrer est déterminé.

13. Procédé selon au moins l'une des revendications précédentes,
**caractérisé**
**en ce que** concernant l'unité apte à vibrer, il s'agit d'une membrane, d'une membrane avec une fourche vibrante ou d'un barreau vibrant.
